(19) Europäisches Patentamt
European Patent Office
Office européen des brevets

(11) **EP 4 668 686 A1**

(12) **EUROPEAN PATENT APPLICATION**
published in accordance with Art. 153(4) EPC

(43) Date of publication:
**24.12.2025 Bulletin 2025/52**

(21) Application number: **24756190.5**

(22) Date of filing: **07.02.2024**

(51) International Patent Classification (IPC):
**H04L 27/26** (2006.01)

(52) Cooperative Patent Classification (CPC):
**H04L 27/20; H04L 27/26;** Y02D 30/70

(86) International application number:
**PCT/CN2024/076508**

(87) International publication number:
**WO 2024/169817 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.02.2023 CN 202310131415**

(71) Applicant: **Vivo Mobile Communication Co., Ltd.
Dongguan, Guangdong 523863 (CN)**

(72) Inventors:
• **CAI, Jiansheng
Dongguan, Guangdong 523863 (CN)**
• **QU, Xin
Dongguan, Guangdong 523863 (CN)**
• **WU, Kai
Dongguan, Guangdong 523863 (CN)**
• **TAN, Junjie
Dongguan, Guangdong 523863 (CN)**

(74) Representative: **dompatent
Partnerschaft von
Patentanwälten und Rechtsanwälten mbB
Deichmannhaus am Dom
Bahnhofsvorplatz 1
50667 Köln (DE)**

(54) **METHOD AND APPARATUS FOR GENERATING LOW POWER CONSUMPTION SIGNAL, TERMINAL, AND NETWORK-SIDE DEVICE**

(57) The present application discloses a method and apparatus for generating a low power consumption signal, a terminal and a network-side device, and belongs to the technical field of communication. The method for generating a low power consumption signal, of the embodiment of the present application, comprises: a communication device executing a target operation on a first sequence to obtain a first signal; the communication device performing inverse fast Fourier transform (IFFT) processing on the first signal to obtain a low power consumption signal; wherein the first sequence is determined on the basis of information to be transmitted, and the target operation comprises any one of the following: multiplying the first sequence by a phase adjustment sequence to obtain a second signal, then multiplying the second signal by a first preprocessing matrix; multiplying the first sequence by a first preprocessing matrix to obtain a second sequence, then performing target processing on the second sequence, the target processing being used for performing repeated overlapping on the second sequence following a cyclic shift, or for performing phase adjustment on the second sequence.

FIG. 2

**Description**

**CROSS-REFERENCE TO RELATED APPLICATIONS**

This application claims priority to Chinese Patent Application No. 202310131415.1, filed on February 17, 2023, which is incorporated herein by reference in its entirety.

**TECHNICAL FIELD**

This application pertains to the field of communication technologies, and specifically relates to a method and an apparatus for generating a low power signal, a terminal, and a network-side device.

**BACKGROUND**

With development of communication technologies, a low power signal (low power signal) is received at a mobile communication terminal by introducing a low power wake up radio (low power wake up radio, LP-WUR), so that a primary communication module is in a disabled or sleep state, thereby effectively reducing power consumption of the terminal. The low power signal may also be referred to as a low power wake up signal (low power wake up signal, LP-WUS). The LP-WUS usually modulates a signal in an on-off keying (On-Off Keyed, OOK) manner. Signal spectrum energy of a conventional OOK signal is concentrated at a central location, and the signal is prone to be affected by channel frequency selective fading, resulting in serious signal waveform distortion at a receive end, and affecting demodulation performance. Therefore, in the prior art, transmission performance of the low power signal is poor.

**SUMMARY**

Embodiments of this application provide a method and an apparatus for generating a low power signal, a terminal, and a network-side device, to resolve a problem of poor transmission performance of the low power signal.
According to a first aspect, a method for generating a low power signal is provided. The method is performed by a communication device, and the method includes:

performing, by the communication device, a target operation on a first sequence to obtain a first signal; and
performing, by the communication device, inverse fast Fourier transform IFFT processing on the first signal to obtain a low power signal, where
the first sequence is determined based on to-be-transmitted information, and the target operation includes any one of the following:

performing a multiplication operation on the first sequence and a phase adjustment sequence to obtain a second signal, and then multiplying the second signal by a first preprocessing matrix; or
multiplying the first sequence by the first preprocessing matrix to obtain a second sequence, and then performing target processing on the second sequence, where the target processing is used to cyclically shift the second sequence and then perform repeated superposition, or is used to perform phase adjustment on the second sequence.

According to a second aspect, an apparatus for generating a low power signal is provided, including:

an execution module, configured to perform a target operation on a first sequence to obtain a first signal; and
a processing module, configured to perform inverse fast Fourier transform IFFT processing on the first signal to obtain a low power signal, where
the first sequence is determined based on to-be-transmitted information, and the target operation includes any one of the following:

performing a multiplication operation on the first sequence and a phase adjustment sequence to obtain a second signal, and then multiplying the second signal by a first preprocessing matrix; or
multiplying the first sequence by the first preprocessing matrix to obtain a second sequence, and then performing target processing on the second sequence, where the target processing is used to cyclically shift the second sequence and then perform repeated superposition, or is used to perform phase adjustment on the second sequence.

According to a third aspect, a terminal is provided. The terminal includes a processor and a memory. The memory stores a program or instructions capable of running on the processor, and when the program or the instructions are executed by the processor, the steps of the method according to the first aspect are implemented.

According to a fourth aspect, a terminal is provided, including a processor and a communication interface. The processor is configured to: perform a target operation on a first sequence to obtain a first signal; and perform inverse fast Fourier transform IFFT processing on the first signal to obtain a low power signal, where the first sequence is determined based on to-be-transmitted information, and the target operation includes any one of the following: performing a multiplication operation on the first sequence and a phase adjustment sequence to obtain a second signal, and then multiplying the second signal by a first preprocessing matrix; or multiplying the first sequence by the first preprocessing matrix to obtain a second sequence, and then performing target processing on the second sequence, where the target processing is used to cyclically shift the second sequence and then perform repeated superposition, or is used to perform phase adjustment on the second sequence.

According to a fifth aspect, a network-side device is provided. The network-side device includes a processor and a memory. The memory stores a program or instructions capable of running on the processor, and when the program or the instructions are executed by the processor, the steps of the method according to the first aspect are implemented.

According to a sixth aspect, a network-side device is provided, including a processor and a communication interface. The processor is configured to: perform a target operation on a first sequence to obtain a first signal; and perform inverse fast Fourier transform IFFT processing on the first signal to obtain a low power signal, where the first sequence is determined based on to-be-transmitted information, and the target operation includes any one of the following: performing a multiplication operation on the first sequence and a phase adjustment sequence to obtain a second signal, and then multiplying the second signal by a first preprocessing matrix; or multiplying the first sequence by the first preprocessing matrix to obtain a second sequence, and then performing target processing on the second sequence, where the target processing is used to cyclically shift the second sequence and then perform repeated superposition, or is used to perform phase adjustment on the second sequence.

According to a seventh aspect, a readable storage medium is provided. The readable storage medium stores a program or instructions, and when the program or the instructions are executed by a processor, the steps of the method according to the first aspect are implemented.

According to an eighth aspect, a chip is provided. The chip includes a processor and a communication interface. The communication interface is coupled to the processor. The processor is configured to run a program or instructions to implement the method according to the first aspect.

According to a ninth aspect, a computer program/program product is provided. The computer program/program product is stored in a storage medium. The program/program product is executed by at least one processor to implement the steps of the method for generating a low power signal according to the first aspect.

In the embodiments of this application, the communication device performs the target operation on the first sequence to obtain the first signal; and the communication device performs inverse fast Fourier transform IFFT processing on the first signal to obtain the low power signal, where the first sequence is determined based on the to-be-transmitted information, and the target operation includes any one of the following: performing a multiplication operation on the first sequence and the phase adjustment sequence to obtain the second signal, and then multiplying the second signal by the first preprocessing matrix; or multiplying the first sequence by the first preprocessing matrix to obtain the second sequence, and then performing target processing on the second sequence, where the target processing is used to cyclically shift the second sequence and then perform repeated superposition, or is used to perform phase adjustment on the second sequence. In this way, before IFFT processing is performed, a cyclic shift is performed and then repeated superposition is performed, or phase adjustment is performed, so that spectrum energy of the generated low power signal can be distributed at different frequencies. Therefore, in the embodiments of this application, transmission performance of the low power signal is improved.

**BRIEF DESCRIPTION OF DRAWINGS**

FIG. 1 is a schematic diagram of a structure of a network applicable to an embodiment of this application;
FIG. 2 is a schematic flowchart of a method for generating a low power signal according to an embodiment of this application;
FIG. 3A is an example diagram 1 of a time domain waveform of a time domain signal determined by performing repeated sampling based on to-be-transmitted information in a method for generating a low power signal according to an embodiment of this application;
FIG. 3B is an example diagram 1 of a frequency domain waveform of a time domain signal determined by performing repeated sampling based on to-be-transmitted information in a method for generating a low power signal according to an embodiment of this application;

FIG. 3C is an example diagram of a frequency domain waveform of a spread low power signal in a method for generating a low power signal according to an embodiment of this application;

FIG. 3D is an example diagram of a time domain waveform of a spread low power signal in a method for generating a low power signal according to an embodiment of this application;

FIG. 4A is an example diagram 2 of a time domain waveform of a time domain signal determined by performing repeated sampling based on to-be-transmitted information in a method for generating a low power signal according to an embodiment of this application;

FIG. 4B is an example diagram 2 of a frequency domain waveform of a time domain signal determined by performing repeated sampling based on to-be-transmitted information in a method for generating a low power signal according to an embodiment of this application;

FIG. 4C is an example diagram of a frequency domain waveform of a spread low power signal in a method for generating a low power signal according to an embodiment of this application;

FIG. 4D is an example diagram of a time domain waveform of a spread low power signal in a method for generating a low power signal according to an embodiment of this application;

FIG. 4E is an example diagram 1 of a time domain waveform of a time domain signal in a method for generating a low power signal according to an embodiment of this application;

FIG. 4F is an example diagram 1 of a frequency domain waveform of a time domain signal in a method for generating a low power signal according to an embodiment of this application;

FIG. 5A is an example diagram 2 of a frequency domain waveform of a time domain signal in a method for generating a low power signal according to an embodiment of this application;

FIG. 5B is an example diagram 2 of a time domain waveform of a time domain signal in a method for generating a low power signal according to an embodiment of this application;

FIG. 5C is a diagram of a frequency domain waveform of a frequency domain signal obtained by performing a cyclic shift and then performing repeated superposition in a method for generating a low power signal according to an embodiment of this application;

FIG. 5D is a diagram of a time domain waveform of a frequency domain signal obtained by performing a cyclic shift and then performing repeated superposition in a method for generating a low power signal according to an embodiment of this application;

FIG. 5E is an example diagram 3 of a frequency domain waveform of a time domain signal in a method for generating a low power signal according to an embodiment of this application;

FIG. 5F is an example diagram 3 of a time domain waveform of a time domain signal in a method for generating a low power signal according to an embodiment of this application;

FIG. 6A is an example diagram 4 of a frequency domain waveform of a time domain signal in a method for generating a low power signal according to an embodiment of this application;

FIG. 6B is an example diagram 4 of a time domain waveform of a time domain signal in a method for generating a low power signal according to an embodiment of this application;

FIG. 6C is an example diagram of a waveform obtained after a cyclic shift and superposition are performed on the time domain signal in FIG. 6A;

FIG. 6D is an example diagram of a waveform obtained after a cyclic shift and superposition are performed on the time domain signal in FIG. 6B;

FIG. 6E is an example diagram 5 of a frequency domain waveform of a time domain signal in a method for generating a low power signal according to an embodiment of this application;

FIG. 6F is an example diagram 5 of a time domain waveform of a time domain signal in a method for generating a low power signal according to an embodiment of this application;

FIG. 7 is a schematic diagram of a structure of an apparatus for generating a low power signal according to an embodiment of this application;

FIG. 8 is a schematic diagram of a structure of a communication device according to an embodiment of this application;

FIG. 9 is a schematic diagram of a structure of a terminal according to an embodiment of this application; and

FIG. 10 is a schematic diagram of a structure of a network-side device according to an embodiment of this application.

## DESCRIPTION OF EMBODIMENTS

The following clearly describes technical solutions in embodiments of this application with reference to accompanying drawings in the embodiments of this application. Clearly, the described embodiments are merely some rather than all of the embodiments of this application. All other embodiments obtained by a person of ordinary skill in the art based on the embodiments of this application shall fall within the protection scope of this application.

The terms "first", "second", and the like in this application are used to distinguish between similar objects instead of describing a specified order or sequence. It should be understood that terms used in this way may be interchangeable under appropriate circumstances, so that the embodiments of this application can be implemented in an order other than that illustrated or described herein. Moreover, the terms "first" and "second" typically distinguish between objects of one category rather than limiting a quantity of objects. For example, there may be one or more first objects. In addition, "or" in this application represents at least one of connected objects. For example, "A or B" includes three solutions: a solution 1: including A and excluding B; a solution 2: including B and excluding A; and a solution 3: including both A and B. The character "/" generally represents an "or" relationship between associated objects.

The term "indication" in this application may be either a direct indication (or an explicit indication) or an indirect indication (or an implicit indication). The direct indication may be understood as follows: A sending party explicitly notifies, in a sent indication, a receiving party of specific information, an operation that needs to be performed, a requested result, or other content. The indirect indication may be understood as follows: The receiving party determines corresponding information based on the indication sent by the sending party, or performs determining based on the indication sent by the sending party, and determines, based on a determining result, the operation that needs to be performed or the requested result.

It should be noted that a technology described in the embodiments of this application is not limited to a long term evolution (Long Term Evolution, LTE)/LTE-advanced (LTE-Advanced, LTE-A) system, and may be further applied to other wireless communication systems, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency-division multiple access (Single-carrier Frequency-Division Multiple Access, SC-FDMA) system, and another system. The terms "system" and "network" are often used interchangeably in the embodiments of this application. A technology described may be used for the systems and radio technologies described above, as well as other systems and radio technologies. The following describes a new radio (New Radio, NR) system for illustrative purposes, and NR terms are used in most of the following descriptions. However, these technologies are also applicable to systems such as a 6th generation (6th Generation, 6G) communication system other than NR systems.

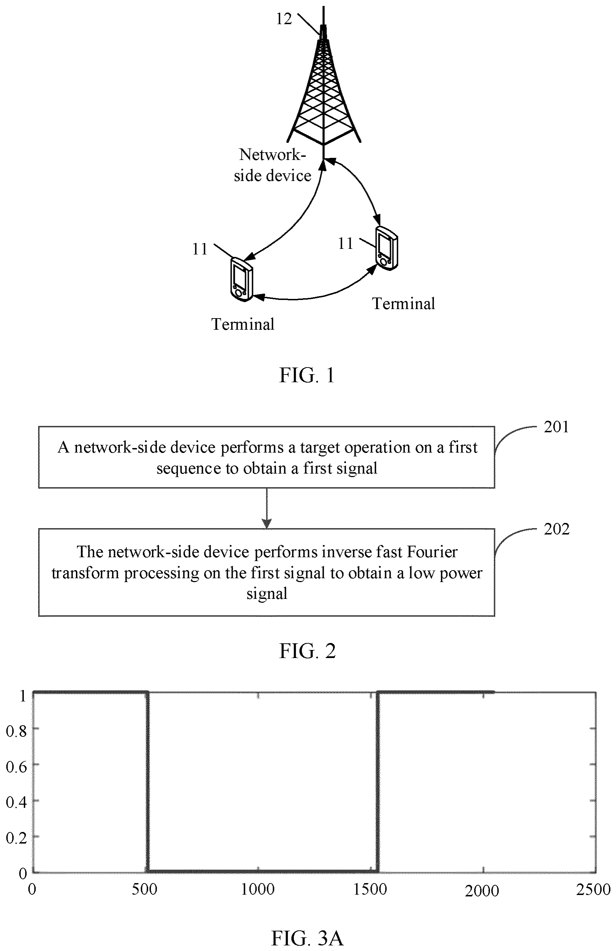

FIG. 1 is a block diagram of a wireless communication system applicable to an embodiment of this application. The wireless communication system includes a terminal 11 and a network-side device 12. The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) device, a virtual reality (Virtual Reality, VR) device, a robot, a wearable device (Wearable Device), a flight vehicle (flight vehicle), vehicle user equipment (Vehicle User Equipment, VUE), ship-mounted equipment, pedestrian user equipment (Pedestrian User Equipment, PUE), a smart home (a home device with a wireless communication function, for example, a refrigerator, a television, a laundry machine, or a furniture), a gaming console, a personal computer (Personal Computer, PC), a teller machine, a self-service machine, or another terminal-side device. The wearable device includes a smart watch, a smart band, a smart headset, smart glasses, smart jewelry (a smart bracelet, a smart wristlet, a smart ring, a smart necklace, a smart anklet, a smart leglet, and the like), a smart wristband, smart clothing, and the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal 11 is not limited in this embodiment of this application. The network-side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AS), a Wireless Fidelity (Wireless Fidelity, WiFi) node, and the like. The base station may be referred to as a NodeB (NodeB, NB), an evolved NodeB (Evolved NodeB, eNB), the next generation NodeB (the next generation NodeB, gNB), a new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another proper term in the field. The base station is not limited to a specific technical term, provided that the same technical effect is achieved. It should be noted that in this embodiment of this application, only a base station in an NR system is used as an example for description, and a specific type of the base station is not limited.

For ease of understanding, the following describes some content related to the embodiments of this application.

I. Low power radio.

The low power radio may also be referred to as a low power wake up signal radio (LP WUR). A basic working principle of the LP WUR is as follows: A receive end includes a first module and a second module. The first module is a primary communication module, and is configured to send and receive mobile communication data. The second module is a low power wake up receiving module, and is configured to receive a wake up signal. In an energy-saving state, a terminal enables the low power receiving module to monitor the LP-WUS, and disables the primary communication module. When downlink data arrives, a network-side device sends a wake up signal to the terminal. After detecting the wake up signal by using the low power receiving module, the terminal triggers the primary communication module after a series of determining, to change from a disabled state to an enabled state (in this case, the low power receiving module enters the disabled state from a working state). The low power wake up receiving module may be continuously enabled or intermittently enabled, and may receive a low power wake up signal when being enabled.

II. Low power wake up signal LP-WUS, which may also be referred to as an almost zero power wake up signal (almost zero power wake up signal, AZP-WUS).

To reduce receiving activity of the terminal in a standby state, so that a radio frequency (Radio Frequency, RF) module and a baseband (which may also be referred to as modem) module are truly disabled, and communication receiving power consumption is greatly reduced, an almost "zero" power radio may be introduced into the receiving module of the terminal. This almost "zero" power radio does not require complex signal detection (such as amplification, filtering, and quantization) by the RF module and signal processing by the modem, and can only depend on passive matched filtering and low power signal processing.

On a base station side, a low power wake up signal may be triggered on-demand (on-demand), so that the almost "zero" power radio can be activated to learn of an activation advertisement, thereby triggering a series of procedures inside the terminal, for example, enabling a radio frequency transceiver module and a baseband processing module.

Generally, the low power wake up signal is a relatively simple on-off keying (on-off keying) signal. In this way, the radio can learn of a wake up advertisement by using a process such as simple energy detection and subsequent possible sequence detection and identification.

III. Multi-carrier OOK (Multicarrier OOK, MC-OOK) waveform generation method.

There are usually two manners of generating an MC-OOK waveform of the LP-WUS, which are a discrete Fourier transform spread orthogonal frequency division multiplexing (Discrete Fourier Transform Spread Orthogonal Frequency Division Multiplexing, DFT-S-OFDM) based waveform generation manner and a least squares method based waveform generation manner. The generation manners are as follows:

1. DFT-S-OFDM based waveform generation manner.

Considering an uplink DFT-S-OFDM based procedure of NR, a sequence may first undergo a DFT transform to form a mapped sequence in frequency domain, and then the mapped sequence is inversely transformed to more points in time domain. This transform manner is equivalent to extension from carrying one piece of chip (chip) information by each sampling point to carrying one piece of chip information by a plurality of sampling points. All the chip information is still carried, and carrying one chip by a plurality of sampling points is equivalent to generating a relatively specific waveform, ensuring that a waveform obtained after OFDM modulation is a time domain waveform up to 2048 points. For example, to-be-transmitted information is 4-bit (bit) information [1, 0, 1, 0], upsampling (namely, repeated sampling) is performed on the to-be-transmitted information to obtain [1, ..., 1, 0, ..., 0, 1, ..., 1, 0, ..., 0], and then [1, ..., 1, 0, ..., 0, 1, ..., 1, 0, ..., 0] are mapped to M OFDM subcarriers by performing an M-point DFT.

2. Least squares carrier generation manner.

Least squares is a relatively simple optimization manner. Least squares mainly optimizes an input frequency domain sequence X by using a fast Fourier transform (Fast Fourier Transform, FFT) matrix and an ideal time domain waveform, so that an effect obtained after an inverse fast Fourier transform (Inverse Fast Fourier Transform, IFFT) is approximated to the ideal time domain waveform.

Optionally, the FFT matrix is as follows:

$$\begin{bmatrix} 1 & 1 & 1 & ... & 1 & 1 \\ 1 & w & w^2 & ... & w^{N-2} & w^{N-1} \\ 1 & w^2 & w^4 & ... & w^{2(N-2)} & w^{2(N-1)} \\ ... & ... & ... & ... & ... & ... \\ 1 & w^{N-2} & w^{2(N-2)} & ... & w^{(N-2)(N-2)} & w^{(N-1)(N-2)} \\ 1 & w^{N-1} & w^{2(N-1)} & ... & w^{(N-2)(N-1)} & w^{(N-1)(N-1)} \end{bmatrix}$$

Optionally, the FFT matrix may be understood as a matrix of a pre- and post-transform relationship. $w^k = e^{-j\frac{2\pi k}{N}}$. Rows and columns are orthogonal to each other. A Fourier matrix is a matrix form of a Fourier transform, and has two characteristics:

symmetry, namely, diagonal symmetry, where a conjugate transpose of the matrix is equal to a conjugate of the matrix; and

orthogonality, where an autocorrelation is a sequence length, and a cross-correlation is 0; an inverse matrix of the matrix is a conjugate transpose of the matrix; and because a Fourier inverse transform is 1/N of a forward transform, a change relationship between a Fourier inverse matrix $\mathbf{F_{inv}}^{-1}$ and a Fourier forward matrix $\mathbf{F^*}$ is: $\mathbf{F_{inv}}^{-1} = \frac{1}{N}\mathbf{F^*}$.

A specific implementation method is consistent with the DFT-S-OFDM waveform generation manner. First, to-be-transmitted information is upsampled to obtain b (for example, [1, ..., 1, 0, ..., 0, 1, ..., 1, 0, ..., 0]), and b is multiplied by a predistortion matrix H to obtain desired spectrum information $x \cdot x = (\tilde{F}^H \tilde{F})^{-1} \tilde{F}^H b$ $H = (\tilde{F}^H \tilde{F})^{-1} \tilde{F}^H$ represents the predistortion matrix, b represents the to-be-transmitted information, and $\tilde{F}$ represents the Fourier forward matrix.

With reference to the accompanying drawings, the following describes in detail the method for generating a low power signal provided in the embodiments of this application by using some embodiments and application scenarios thereof.

Referring to FIG. 2, an embodiment of this application provides a method for generating a low power signal. As shown in FIG. 2, the method for generating a low power signal includes the following steps.

Step 201: A network-side device performs a target operation on a first sequence to obtain a first signal.

Step 202: The network-side device performs inverse fast Fourier transform IFFT processing on the first signal to obtain a low power signal.

The first sequence is determined based on to-be-transmitted information, and the target operation includes any one of the following:

performing a multiplication operation on the first sequence and a phase adjustment sequence to obtain a second signal, and then multiplying the second signal by a first preprocessing matrix; or

multiplying the first sequence by the first preprocessing matrix to obtain a second sequence, and then performing target processing on the second sequence, where the target processing is used to cyclically shift the second sequence and then perform repeated superposition, or is used to perform phase adjustment on the second sequence.

In this embodiment of this application, the first sequence may be understood as time domain information (which may also be referred to as a time domain signal) or frequency domain information (which may also be referred to as a frequency domain signal). Optionally, the phase adjustment sequence is used to perform phase adjustment on the first sequence, and may be further used to perform amplitude adjustment on the first sequence. In other words, the phase adjustment sequence is used to adjust a phase of the first sequence in time-frequency domain or adjust a phase and an amplitude in time-frequency domain, so that finally obtained spectrum energy of the low power signal is distributed at different frequencies, thereby improving transmission performance of the low power signal.

Optionally, the multiplying the first sequence by the first preprocessing matrix to obtain a second sequence may be understood as converting time domain information into frequency domain information, and then performing at least one of performing a cyclic shift and repeated superposition and performing phase adjustment on the second sequence, so that the spectrum energy of the finally obtained low power signal can be distributed at different frequencies, thereby improving transmission performance of the low power signal. Optionally, the target processing may be further used to perform amplitude adjustment on the second sequence.

It should be noted that, that the first sequence is determined based on the to-be-transmitted information may mean that the first sequence is determined based on at least one of bandwidth associated with the to-be-transmitted information, a size of the to-be-transmitted information, and transmission bit information of the to-be-transmitted information.

It should be understood that the foregoing communication device may be understood as a terminal or the network-side device. For example, after the terminal enters an energy saving mode, the network-side device sends the low power signal to wake up the terminal; or after the network-side device enters an energy saving mode, the terminal sends the low power signal to wake up the network-side device. In this embodiment of this application, waking up may be understood as exiting the energy saving mode or switching from a deep energy saving mode to a shallow energy saving mode.

In this embodiment of this application, the communication device performs the target operation on the first sequence to obtain the first signal; and the communication device performs inverse fast Fourier transform IFFT processing on the first signal to obtain the low power signal, where the first sequence is determined based on the to-be-transmitted information, and the target operation includes any one of the following: performing a multiplication operation on the first sequence and the phase adjustment sequence to obtain the second signal, and then multiplying the second signal by the first preprocessing matrix; or multiplying the first sequence by the first preprocessing matrix to obtain the second sequence, and then performing target processing on the second sequence, where the target processing is used to cyclically shift the second sequence and then perform repeated superposition, or is used to perform phase adjustment on the second sequence. In this way, before IFFT processing is performed, a cyclic shift is performed and then repeated superposition is performed, or phase adjustment is performed, so that spectrum energy of the generated low power signal can be distributed at different frequencies. Therefore, in this embodiment of this application, transmission performance of the low power signal is improved.

Optionally, in some embodiments, the phase adjustment sequence meets at least one of the following:

the phase adjustment sequence is a sequence in a preset sequence set; and
the phase adjustment sequence is determined based on first information, and the first information includes at least one of transmission bit information of the to-be-transmitted information, a sequence value of the first sequence, a length of the first sequence, bandwidth of the low power signal, a transmission rate of the low power signal, channel bandwidth used by the communication device to send a signal, and a quantity of fast Fourier transform FFT points for performing IFFT processing for generation by the communication device.

In this embodiment of this application, a sequence may be directly selected from the preset sequence set as the phase adjustment sequence, or a sequence may be selected from the preset sequence set as the phase adjustment sequence based on the first information, or the phase adjustment sequence may be directly generated based on the first information. This is not further limited herein.

Optionally, in some embodiments, the phase adjustment sequence includes at least one of the following:

at least one of a CAZAC sequence, a ZC sequence, a BPSK sequence, a $\pi/2$-BPSK sequence, a gold sequence, an m sequence, and a computer search sequence;
a sequence obtained by combining at least two of the CAZAC sequence, the ZC sequence, the BPSK sequence, the $\pi/2$-BPSK sequence, the gold sequence, the m sequence, and the computer search sequence; and
a sequence obtained by performing repeated sampling on at least one of the CAZAC sequence, the ZC sequence, the BPSK sequence, the $\pi/2$-BPSK sequence, the gold sequence, the m sequence, and the computer search sequence.

Optionally, in some embodiments, a manner of combining at least two of the CAZAC sequence, the ZC sequence, the BPSK sequence, the $\pi/2$-BPSK sequence, the gold sequence, the m sequence, and the computer search sequence includes at least one of concatenation, multiplication, and a Kronecker (kronecker) product.

Optionally, in some embodiments, the first preprocessing matrix includes any one of the following: a predistortion matrix, a discrete Fourier transform (Discrete Fourier Transform, DFT) matrix, and an identity matrix.

In this embodiment of this application, for the operation behavior of performing a multiplication operation on the first sequence and a phase adjustment sequence to obtain a second signal, and then multiplying the second signal by a first preprocessing matrix, the first preprocessing matrix may be the predistortion matrix, the DFT matrix, or the identity matrix. For the operation behavior of multiplying the first sequence by the first preprocessing matrix to obtain a second sequence, and then performing target processing on the second sequence, the first preprocessing matrix may be the predistortion matrix or the DFT matrix.

It should be understood that when the first preprocessing matrix includes the predistortion matrix or the DFT matrix, it may be understood that the first preprocessing matrix is used to convert a time domain signal into a frequency domain signal. In this case, the first sequence may be understood as time domain information or a time domain signal. After phase adjustment is performed on the first sequence by using the first preprocessing matrix, the second signal may be obtained, and then time-frequency conversion is performed by using the first preprocessing matrix to obtain the first signal. When a DFT transform is performed by using the DFT matrix, if a quantity of DFT points is greater than the bandwidth of the low power signal, information truncation or information preservation needs to be performed by using a fundamental component or a maximum value of signal energy obtained after the DFT transform as a center and the bandwidth of the low power signal as a window size, to obtain the first signal.

Optionally, the predistortion matrix may be obtained by using a preset method. For details, refer to the foregoing least squares beam generation manner. Details are not described herein again.

When the first preprocessing matrix is the identity matrix, it may be understood that no processing is performed, or information after multiplication by the first preprocessing matrix is consistent with information before multiplication by the first preprocessing matrix. In this case, the first sequence may be understood as frequency domain information or a frequency domain signal. The first signal may be understood as the first signal. After phase adjustment is performed by using the first preprocessing matrix, the second signal may be obtained, and the second signal is determined as the first signal, or the second signal is multiplied by the identity matrix to obtain the first signal.

Optionally, in some embodiments, the first preprocessing matrix meets at least one of the following:

the first preprocessing matrix is a matrix in a first preset matrix set; and
the first preprocessing matrix is determined based on second information, and the second information includes at least one of the transmission bit information of the to-be-transmitted information, the sequence value of the first sequence, the length of the first sequence, the bandwidth of the low power signal, the transmission rate of the low power signal, the channel bandwidth used by the communication device to send a signal, and the quantity of FFT points for performing IFFT processing for generation by the communication device.

In this embodiment of this application, a sequence may be directly selected from the first preset matrix set as the first preprocessing matrix, or a sequence may be selected from the first preset matrix set as the first preprocessing matrix based on the second information, or the first preprocessing matrix may be directly generated based on the second information. This is not further limited herein.

Optionally, in some embodiments, the target processing includes any one of the following:

obtaining K intermediate sequences by cyclically shifting the second sequence K times, and superposing the K intermediate sequences with the second sequence; or
cyclically shifting the second sequence K times to obtain K intermediate sequences, and superposing the K intermediate sequences with the second sequence, where each intermediate sequence is multiplied by a different phase rotation; or
left-multiplying the second sequence by a second preprocessing matrix, where
dimensions of the second preprocessing matrix are X*L, L represents a length of the second sequence, and a value of X or K is determined based on at least one of bandwidth of the low power signal, a transmission rate of the low power signal, channel bandwidth used by the communication device to send a signal, and a quantity of FFT points for performing IFFT processing for generation by the communication device.

Optionally, in some embodiments, the second preprocessing matrix meets at least one of the following:

the second preprocessing matrix is a matrix in a second preset matrix set; and
the second preprocessing matrix is determined based on third information, and the third information includes at least one of transmission bit information of the to-be-transmitted information, a sequence value of the first sequence, a length of the first sequence, the bandwidth of the low power signal, the transmission rate of the low power signal, the channel bandwidth used by the communication device to send a signal, and the quantity of FFT points for performing IFFT processing for generation by the communication device.

In this embodiment of this application, a sequence may be directly selected from the second preset matrix set as the second preprocessing matrix, or a sequence may be selected from the second preset matrix set as the second preprocessing matrix based on the third information, or the second preprocessing matrix may be directly generated based on the third information. This is not further limited herein.

Optionally, in some embodiments, before the communication device performs the target operation on the first sequence to obtain the first signal, the method further includes:

performing, by the communication device, time domain processing on the to-be-transmitted information to obtain the first sequence, where the time domain processing includes performing N-fold upsampling on the to-be-transmitted information based on a bit order, and N is a positive integer.

In this embodiment of this application, the N-fold upsampling may be understood as or replaced with N-fold repeated sampling.

For better understanding of this application, the following provides detailed descriptions by using some instances.

In some embodiments, it is assumed that a transmission rate of a symbol (symbol) is 112 kbps, a subcarrier spacing is 30 kHz, an FFT length is 2048, bandwidth of a low power signal is 12 resource blocks (Resource Block, RB), that is, a total of 144 resource elements (Resource element, RE), and total bandwidth is 50 RBs, that is, a total of 600 REs. In this case, 4 bits can be transmitted in one symbol, and transmitted original information bits (namely, transmission bit information of to-be-transmitted information) are [1, 0, 0, 1]. The following is a procedure of generating an MC-OOK waveform.

Solution 1: Least squares method based MC-OOK waveform generation manner.

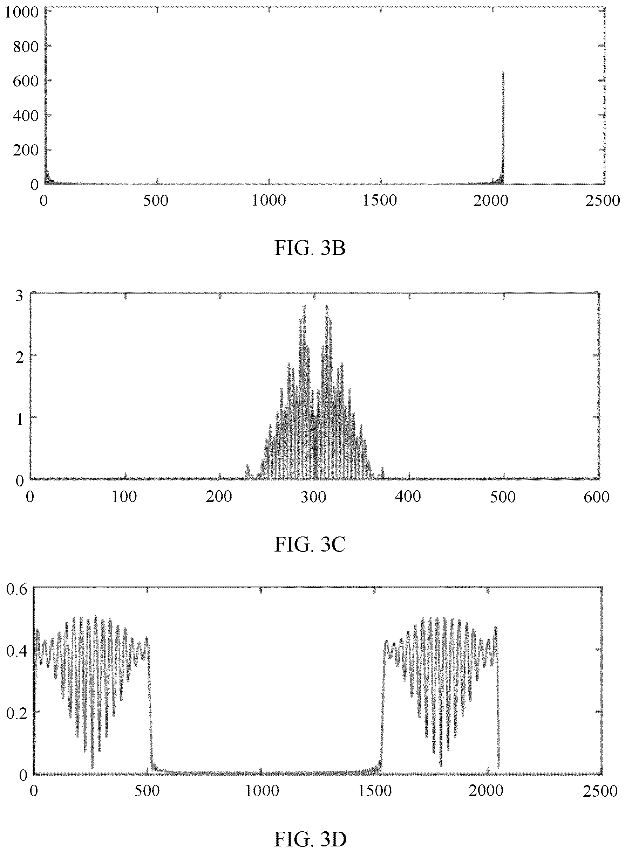

Step 11: Perform N-fold (N is equal to a quantity of FFT points divided by a quantity of bits) time domain sampling on the original information bits in order, and change the original information bits to [1, ..., 1, 0, ..., 0, 0, ..., 0, 1, ..., 1] of the FFT length, where 1 bit is repeatedly sampled 512 times in time domain to obtain a time domain signal b1 (namely, a first sequence) of a length 2048. A time domain waveform of the time domain signal b1 is shown in FIG. 3A, and a frequency domain waveform of the time domain signal b1 is shown in FIG. 3B.

Step 12: Select a phase adjustment sequence A, where the phase adjustment sequence A may be determined based on at least one of the original information bits, a sequence length of the time domain signal b1, a sequence value of the time domain signal b1, the bandwidth of the low power signal, a transmission rate of the low power signal, channel bandwidth used to send a signal, and the quantity of fast Fourier transform FFT points for performing IFFT processing for generation.

For example, the phase adjustment sequence A may be selected from the following phase adjustment sequence set:

| Phase adjustment sequence set | Signal bandwidth | Channel bandwidth | Transmission rate | Sequence length of the time domain signal b1 |
|---|---|---|---|---|
| Phase adjustment sequence 1 | 12 RBs | 60 RBs | 56 kbps | 2048 |
| Phase adjustment sequence 2 | 12 RBs | 60 RBs | 112 kbps | 2048 |
| Phase adjustment sequence 3 | 12 RBs | 60 RBs | 224 kbps | 2048 |
| ... | ... | ... | ... | ... |

Optionally, the phase adjustment sequence A may be at least one of a ZC sequence, a BPSK signal sequence, a $\pi/2$-BPSK signal sequence, a gold sequence, an m sequence, and a sequence generated by performing repeated sampling on the foregoing sequence. For example, the preset sequence generated herein is the ZC sequence. It is assumed that a length of the ZC sequence is X=16. Repeated time domain sampling is performed on the ZC sequence. The ZC sequence is first repeatedly sampled to a length (512) of one chip, and the ZC sequence changes from [ZCu(1), ZCu(2), ..., ZCu(16)] to [ZCu(1), ..., ZCu(1), ZCu(2), ..., ZCu(16), ..., ZCu(16)] after repeated time domain sampling. Then repeated concatenation is performed in time domain to change the length from 512 to 2048, that is, change to [ZCu(1), ..., ZCu(1), ..., ZCu(16), ..., ZCu(16), ZCu(1), ..., ZCu(1), ..., ZCu(16), ..., ZCu(16), ZCu(1), ..., ZCu(1), ..., ZCu(16), ..., ZCu(16), ZCu(1), ..., ZCu(1), ..., ZCu(16),..., ZCu(16)]. In this way, a complete phase adjustment sequence A is generated. The time domain signal b1 is multiplied by the phase adjustment sequence A to obtain a time domain signal b2=b1.*A, and a spectrum of an MC-OOK signal is spread by performing the operation of multiplication by the phase adjustment sequence.

Step 13: Multiply the time domain signal b2 by a predistortion matrix H to obtain a frequency domain signal x1, where dimensions of the predistortion matrix are 2048*144, and in this case, a magnitude of the frequency domain signal is the bandwidth of the low power signal.

Step 14: Perform IFFT on the frequency domain information x1 to obtain time domain information b3 of the MC-OOK signal. In this case, x1 is frequency domain information of a spread signal, for example, a frequency domain waveform of a spread low power signal shown in FIG. 3C, and b3 is time domain information of the spread signal, for example, a time domain waveform of the spread low power signal shown in FIG. 3D.

Solution 2: DFT-S-OFDM based MC-OOK waveform generation manner.

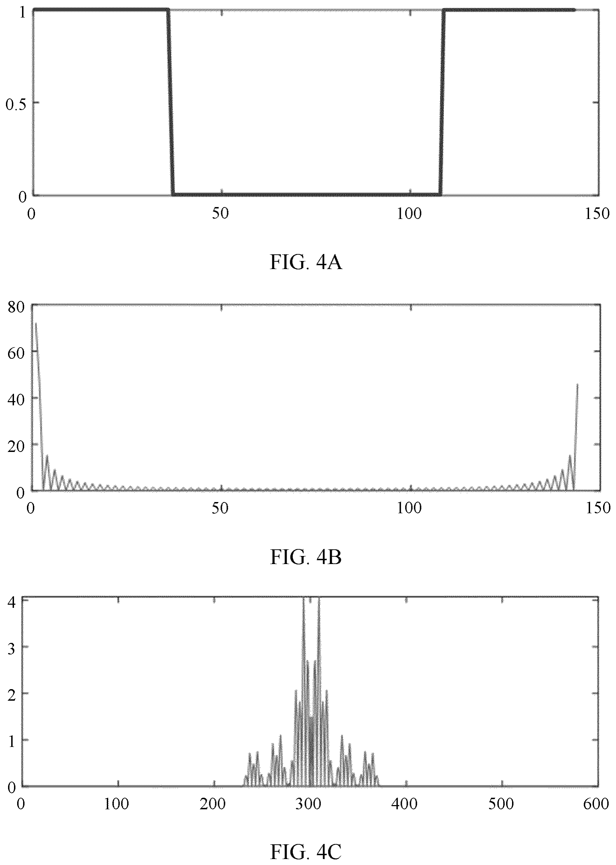

Step 21: Perform repeated sampling on the original information bits (namely, the transmission bit information of the to-be-transmitted information) to change the original information bits to a DFT length, where the DFT length may be the bandwidth 144 (or an FFT length 2048) of the low power signal, the original information bits may be changed to [1, ..., 1, 0, ..., 0, 0, ..., 0, 1, ..., 1], 1 bit is repeatedly sampled 144/4=36 (512) times to obtain a time domain signal b1 (namely, a first sequence) of a length 144, a time domain waveform of the time domain signal b1 is shown in FIG. 4A, and a frequency domain waveform of the time domain signal b1 is shown in FIG. 4B.

Step 22: Select a phase adjustment sequence A, where the phase adjustment sequence A may be determined based on at least one of the original information bits, a sequence length of the time domain signal b1, a sequence value of the time domain signal b1, the bandwidth of the low power signal, a transmission rate of the low power signal, channel bandwidth used to send a signal, and a quantity of fast Fourier transform FFT points for performing IFFT processing for generation.

For example, the phase adjustment sequence A may be selected from the following phase adjustment sequence set:

| Phase adjustment sequence set | Signal bandwidth | Channel bandwidth | Transmission rate | Sequence length of the time domain signal b1 |
|---|---|---|---|---|
| Phase adjustment sequence 1 | 12 RBs | 60 RBs | 56 kbps | 144 |
| Phase adjustment sequence 2 | 12 RBs | 60 RBs | 112 kbps | 144 |
| Phase adjustment sequence 3 | 12 RBs | 60 RBs | 224 kbps | 144 |
| ... | ... | ... | ... | ... |

Optionally, the phase adjustment sequence A may be at least one of a ZC sequence, a BPSK signal sequence, a $\pi/2$-BPSK signal sequence, a gold sequence, an m sequence, and a sequence generated by performing repeated sampling on the foregoing sequence. For example, the phase adjustment sequence A generated herein is the ZC sequence. It is assumed that a length of the ZC sequence is X=6. Repeated time domain sampling is performed on the ZC sequence. The ZC sequence is first repeatedly sampled to a length (36) of one chip. The ZC sequence changes from [ZCu(1), ZCu(2), ..., ZCu(6)] to [ZCu(1), ..., ZCu(1), ZCu(2), ..., ZCu(6), ..., ZCu(6)] after repeated time domain sampling. Then repeated concatenation is performed in time domain to change the length from 36 to 144, that is, change to [ZCu(1), ..., ZCu(1), ..., ZCu(6), ..., ZCu(6), ZCu(1), ..., ZCu(1), ..., ZCu(6), ..., ZCu(6), ZCu(1), ..., ZCu(1), ..., ZCu(6), ..., ZCu(6), ZCu(1), ..., ZCu(1), ..., ZCu(6), ..., ZCu(6)], namely, the phase adjustment sequence A. The signal b1 is multiplied by the phase adjustment sequence A (of a length of a quantity of DFT points) to obtain a time domain signal b2=b1.*A, and a spectrum of an MC-OOK signal is spread by performing the operation of multiplication by the phase adjustment sequence A.

Step 23: Perform a 144-point (or 2048-point) DFT on the time domain signal b2 to obtain a frequency domain signal x1, where if the quantity of DFT points is greater than the bandwidth of the low power signal, the frequency domain signal needs to be truncated by using a frequency 0 as a center and the bandwidth of the low power signal as a size.

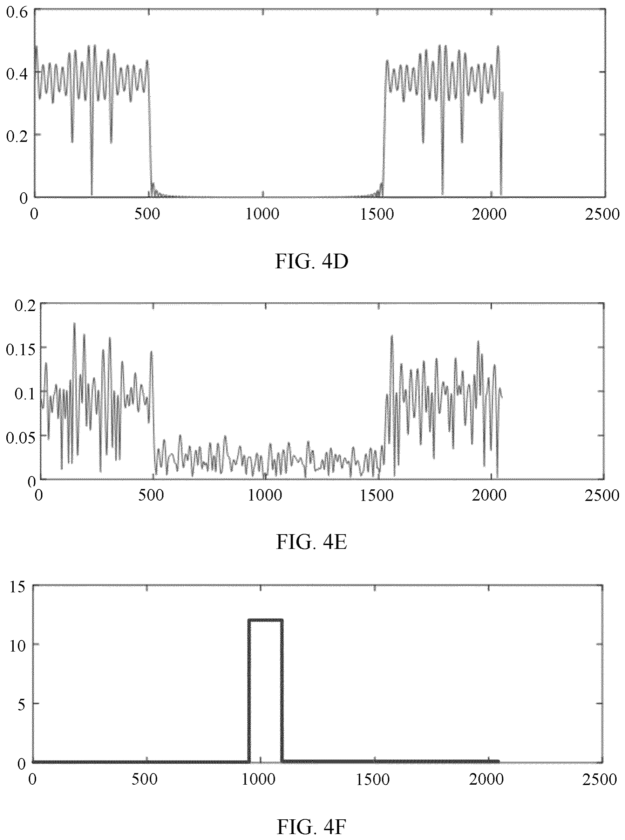

Step 24: Map the frequency domain information x1 to a suitable subcarrier, and perform 2048-point IFFT to obtain time domain information b3 of the MC-OOK signal. In this case, x1 is frequency domain information of a spread signal, for example, a frequency domain waveform of a spread low power signal shown in FIG. 4C, and b3 is time domain information of the spread signal, for example, a time domain waveform of the spread low power signal shown in FIG. 4D.

Optionally, in some embodiments, it is assumed that a transmission rate of a symbol is 112 kbps, a subcarrier spacing is 30 kHz, an FFT length is 2048, bandwidth of a low power signal is 12 RBs, that is, a total of 144 REs, and total bandwidth is 50 RBs, that is, a total of 600 REs. In this case, 4 bits can be transmitted in one symbol, and transmitted original information bits (namely, transmission bit information of to-be-transmitted information) are [1, 0, 0, 1]. The following is a procedure of generating an MC-OOK waveform.

Step 31: First generate all-1 frequency domain information x1 of a length 144.

Step 32: Multiply the frequency domain information by a phase adjustment sequence A to obtain x2=x1*A, and perform phase adjustment. The phase adjustment sequence A may be determined based on at least one of the original information bits, the bandwidth of the low power signal, a transmission rate of the low power signal, channel bandwidth used to send a signal, and a quantity of fast Fourier transform FFT points for performing IFFT processing for generation.

For example, the phase adjustment sequence A may be selected from the following phase adjustment sequence set:

| Phase adjustment sequence set | Signal bandwidth | Channel bandwidth | Transmission rate | Original information bits |
|---|---|---|---|---|
| Phase adjustment sequence 1 | 12 RBs | 60 RBs | 56 kbps | [10] |

(continued)

| Phase adjustment sequence set | Signal bandwidth | Channel bandwidth | Transmission rate | Original information bits |
|---|---|---|---|---|
| Phase adjustment sequence 2 | 12 RBs | 60 RBs | 56 kbps | [0 1] |
| Phase adjustment sequence 3 | 12 RBs | 60 RBs | 56 kbps | [1 1] |
| Phase adjustment sequence 4 | 12 RBs | 60 RBs | 112 kbps | [0 0 0 1] |
| Phase adjustment sequence 5 | 12 RBs | 60 RBs | 112 kbps | [0 0 1 0] |
| ... | ... | ... | ... | ... |

Step 33: Map the frequency domain information x2 to a suitable subcarrier, and perform 2048-point IFFT to obtain time domain information b1 of an MC-OOK signal. In this case, a time domain wavelength of the time domain information b1 is shown in FIG. 4E, and a frequency domain wavelength of the time domain information b1 is shown in FIG. 4F.

Optionally, in some embodiments, it is assumed that a transmission rate of a symbol is 112 kbps, a subcarrier spacing is 30 kHz, an FFT length is 2048, bandwidth of a low power signal is 12 RBs, that is, a total of 144 REs, and total bandwidth is 50 RBs, that is, a total of 600 REs. In this case, 4 bits can be transmitted in one symbol, and transmitted original information bits (namely, transmission bit information of to-be-transmitted information) are [1, 0, 0, 1]. The following is a procedure of generating an MC-OOK waveform.

The least squares based MC-OOK waveform generation manner includes the following steps.

Step 41: Perform time domain sampling on the original information bits in order, and change the original information bits to [1, ..., 1, 0, ..., 0, 0, ..., 0, 1, ..., 1] of the FFT length, where 1 bit is repeatedly sampled 512 times in time domain to obtain a time domain signal b1 (namely, a first sequence) of a length 2048. A time domain waveform of the time domain signal b1 is shown in FIG. 3A, and a frequency domain waveform of the time domain signal b1 is shown in FIG. 3B.

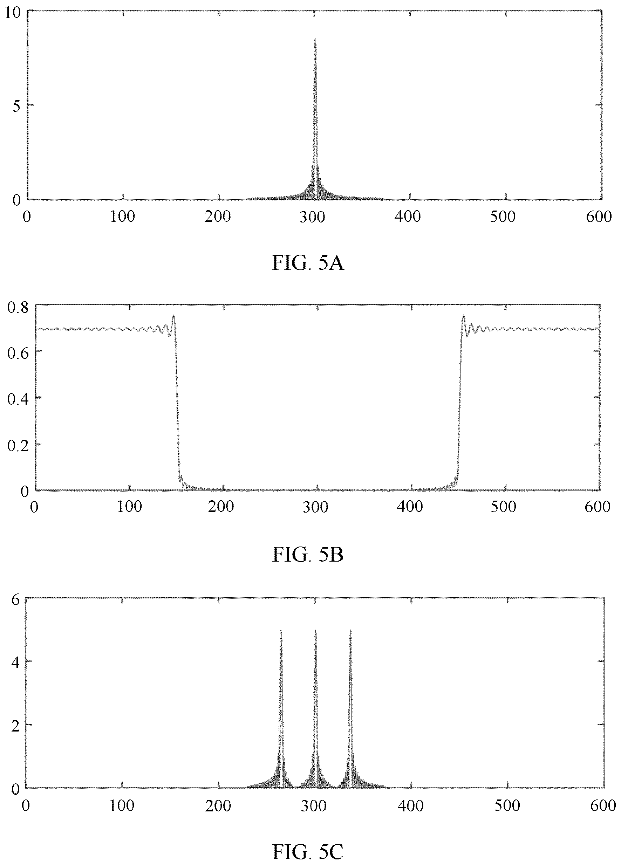

Step 42: Right-multiply the time domain signal b1 by a predistortion matrix H to obtain a frequency domain signal x1=b1*H, where dimensions of the predistortion matrix are 2048*144, in this case, a magnitude of the frequency domain signal is the bandwidth of the low power signal, a frequency domain waveform of the frequency domain signal x1 is shown in FIG. 5A, and a time domain waveform of the frequency domain signal x1 is shown in FIG. 5B.

Step 43: Left-multiply the frequency domain signal x1 by a preprocessing matrix M to obtain a frequency domain signal x2=M*x1, where dimensions of the preprocessing matrix M are X*L (X=1*144), and the preprocessing matrix M is determined based on at least one of the original information bits, a sequence length of the time domain signal b1, a sequence value of the time domain signal b1, the bandwidth of the low power signal, a transmission rate of the low power signal, channel bandwidth for sending a signal on a transmit side, and a quantity of FFT points for signal generation on the transmit side, or the preprocessing matrix M may be from a preprocessing matrix set, and a matrix in the preprocessing matrix set is determined based on at least one of a sequence length of the time domain signal b1, a sequence value of the time domain signal b1, the bandwidth of the low power signal, a transmission rate of the low power signal, channel bandwidth for sending a signal on a transmit side, and a quantity of FFT points for signal generation on the transmit side.

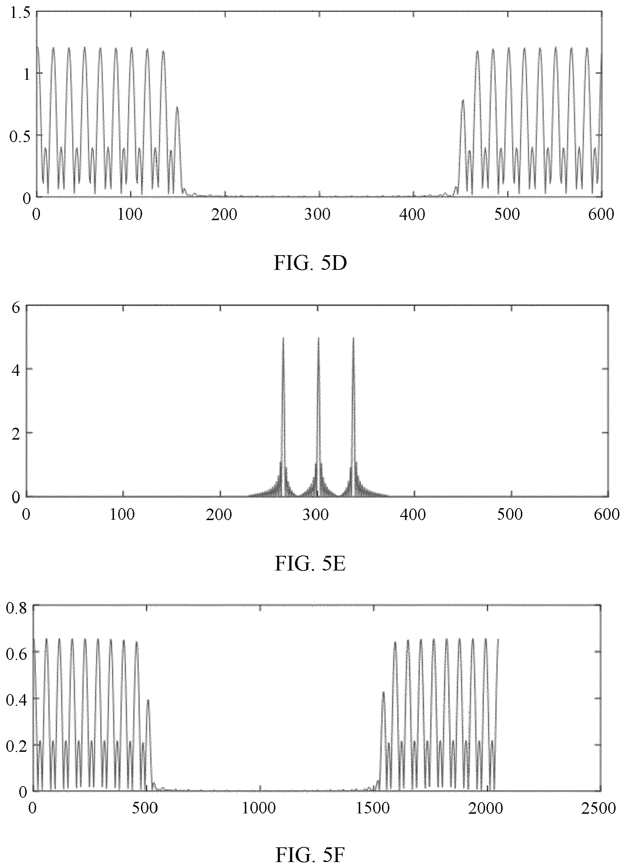

An effect of left-multiplication by the preprocessing matrix M is cyclically shifting the original signal and then performing repeated superposition. For example, in a cyclic shift manner, three cyclic shifts of values [-36, 0, 36] are performed. In this case, spectrum diagrams corresponding to the frequency domain signal x2 are shown in FIG. 5C and FIG. 5D.

Optionally, the preprocessing matrix set is shown in the following table:

| Preprocessing matrix set | Signal bandwidth | Channel bandwidth | Transmission rate | Sequence length of the time domain signal b1 |
|---|---|---|---|---|
| Preprocessing matrix 1 | 12 RBs | 60 RBs | 56 kbps | 2048 |
| Preprocessing matrix 2 | 12 RBs | 60 RBs | 112 kbps | 2048 |
| Preprocessing matrix 3 | 12 RBs | 60 RBs | 224 kbps | 2048 |
| ... | ... | ... | ... | ... |

Step 44: Map the frequency domain information x2 to a corresponding subcarrier, and then perform 2048-point IFFT to obtain time domain information b3 of an MC-OOK signal. In this case, a frequency domain waveform of the time domain information b3 is shown in FIG. 5E, and a time domain waveform of the time domain information b3 is shown in FIG. 5F.

Optionally, in some embodiments, it is assumed that a transmission rate of a symbol is 112 kbps, a subcarrier spacing is 30 kHz, an FFT length is 2048, bandwidth of a low power signal is 12 RBs, that is, a total of 144 REs, and total bandwidth is 50 RBs, that is, a total of 600 REs. In this case, 4 bits can be transmitted in one symbol, and transmitted original information bits (namely, transmission bit information of to-be-transmitted information) are [1, 0, 0, 1]. The following is a procedure of generating an MC-OOK waveform.

Step 51: Perform upsampling on the original information bits to obtain a 2048-point time domain signal b1, determine a cyclic shift value based on a location of a time-domain center sampling point of non-zero bits, and determine cyclic shift values -768 and +768 (where - and + represent a left shift and a right shift) based on the non-zero bits, where such a cyclic shift may be represented by a matrix of 2048*2048 (represented by x1).

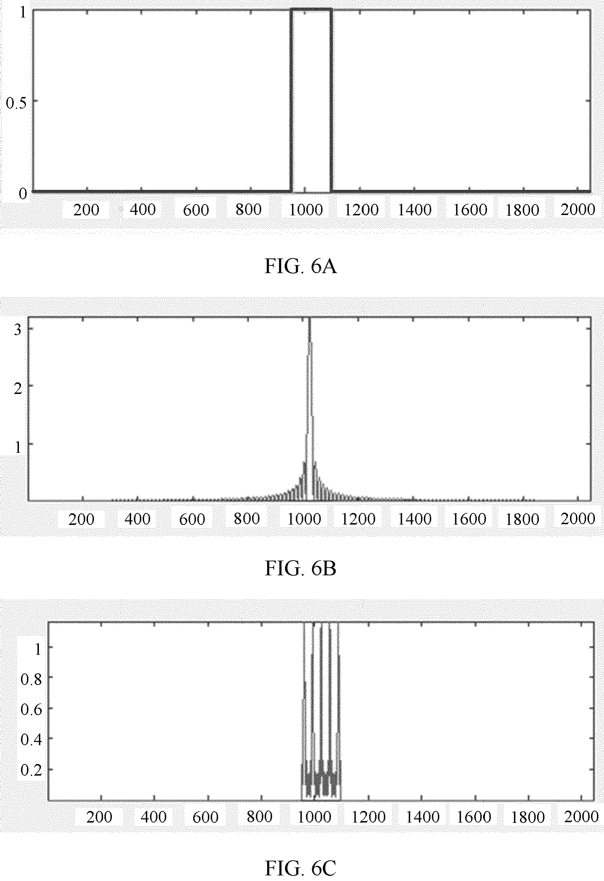

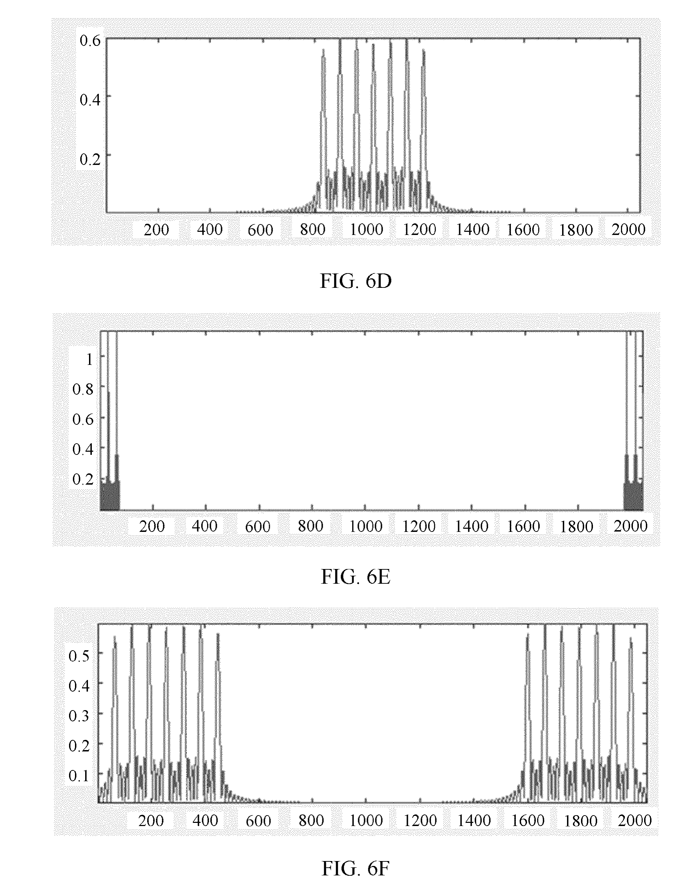

Step 52: Obtain a phase adjustment sequence, where the phase adjustment sequence is obtained in the following manner: REs whose length is the bandwidth of the low power signal are filled with 1, another RE is filled with 0, and a corresponding time domain signal (hereinafter referred to as a signal 1) is obtained through IFFT, where diagrams of the time domain signal in time-frequency domain are shown in FIG. 6A and FIG. 6B; and then the signal 1 is cyclically shifted in time domain and superposition is performed, to obtain a signal 2 (FIG. 6C and FIG. 6D are diagrams, in time-frequency domain, of a signal obtained by performing superposition six times in a case that a cyclic shift value interval is 64). A quantity of times of superposition and a cyclic shift value affect a spectrum characteristic, and are adjusted based on at least one of the original information bits, a sequence length of the time domain signal b1, a sequence value of the time domain signal b1, the bandwidth of the low power signal, a transmission rate of the low power signal, channel bandwidth for sending a signal on a transmit side, and a quantity of FFT points for signal generation on the transmit side. Then the signal 2 is cyclically shifted to a center (for example, 2048/2=1024) in time domain to obtain dimensions 2048*1 of the phase adjustment sequence y1.

Step 53: Perform a cyclic shift and superposition on the phase adjustment sequence y1 based on the cyclic shift value in step 51 (that is, the time domain signal b1 is right-multiplied by the phase adjustment sequence y1 to obtain a signal z1, where z1=x1*y1). A frequency domain waveform of time domain information b3 is shown in FIG. 6E, and a time domain waveform of the time domain information b3 is shown in FIG. 6F.

Step 54: Perform a DFT transform on the signal z1 (if a quantity of DFT points is greater than the bandwidth of the low power signal, information truncation or information preservation needs to be performed by using a fundamental component or a maximum value of signal energy obtained after the DFT transform as a center and the bandwidth of the low power signal as a window size); or multiply the signal z1 by a predistortion matrix H to obtain a frequency domain signal of the low power signal.

The method for generating a low power signal provided in the embodiments of this application may be performed by an apparatus for generating a low power signal. In the embodiments of this application, the apparatus for generating a low power signal provided in the embodiments of this application is described by using an example in which the apparatus for generating a low power signal performs the method for generating a low power signal.

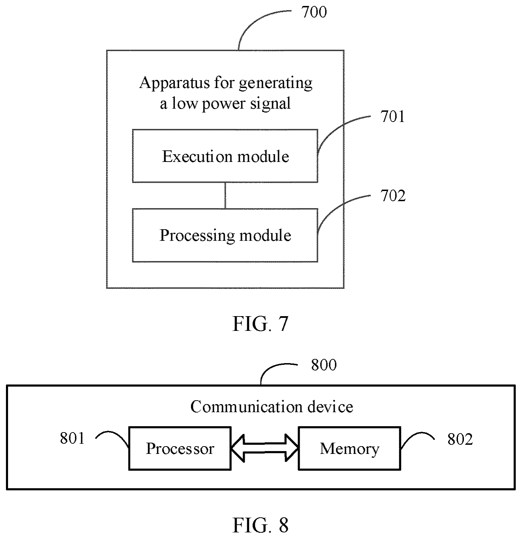

Referring to FIG. 7, an embodiment of this application further provides an apparatus for generating a low power signal. As shown in FIG. 7, the apparatus 700 for generating a low power signal includes:

an execution module 701, configured to perform a target operation on a first sequence to obtain a first signal; and
a processing module 702, configured to perform inverse fast Fourier transform IFFT processing on the first signal to obtain a low power signal, where
the first sequence is determined based on to-be-transmitted information, and the target operation includes any one of the following:

performing a multiplication operation on the first sequence and a phase adjustment sequence to obtain a second signal, and then multiplying the second signal by a first preprocessing matrix; or
multiplying the first sequence by the first preprocessing matrix to obtain a second sequence, and then performing target processing on the second sequence, where the target processing is used to cyclically shift the second sequence and then perform repeated superposition, or is used to perform phase adjustment on the second sequence.

Optionally, the phase adjustment sequence meets at least one of the following:

the phase adjustment sequence is a sequence in a preset sequence set; and
the phase adjustment sequence is determined based on first information, and the first information includes at least one of transmission bit information of the to-be-transmitted information, a sequence value of the first sequence, a length of the first sequence, bandwidth of the low power signal, a transmission rate of the low power signal, channel bandwidth used by a communication device to send a signal, and a quantity of fast Fourier transform FFT points for performing IFFT processing for generation by the communication device.

Optionally, the phase adjustment sequence includes at least one of the following:

at least one of a CAZAC sequence, a ZC sequence, a BPSK sequence, a $\pi/2$-BPSK sequence, a gold sequence, an m sequence, and a computer search sequence;
a sequence obtained by combining at least two of the CAZAC sequence, the ZC sequence, the BPSK sequence, the $\pi/2$-BPSK sequence, the gold sequence, the m sequence, and the computer search sequence; and
a sequence obtained by performing repeated sampling on at least one of the CAZAC sequence, the ZC sequence, the BPSK sequence, the $\pi/2$-BPSK sequence, the gold sequence, the m sequence, and the computer search sequence.

Optionally, a manner of combining at least two of the CAZAC sequence, the ZC sequence, the BPSK sequence, the $\pi/2$-BPSK sequence, the gold sequence, the m sequence, and the computer search sequence includes at least one of concatenation, multiplication, and a Kronecker product.

Optionally, the first preprocessing matrix includes any one of the following: a predistortion matrix, a discrete Fourier transform DFT matrix, and an identity matrix.

Optionally, the first preprocessing matrix meets at least one of the following:

the first preprocessing matrix is a matrix in a first preset matrix set; and
the first preprocessing matrix is determined based on second information, and the second information includes at least one of the transmission bit information of the to-be-transmitted information, the sequence value of the first sequence, the length of the first sequence, the bandwidth of the low power signal, the transmission rate of the low power signal, the channel bandwidth used by the communication device to send a signal, and the quantity of FFT points for performing IFFT processing for generation by the communication device.

Optionally, the target processing includes any one of the following:

obtaining K intermediate sequences by cyclically shifting the second sequence K times, and superposing the K intermediate sequences with the second sequence; or
cyclically shifting the second sequence K times to obtain K intermediate sequences, and superposing the K intermediate sequences with the second sequence, where each intermediate sequence is multiplied by a different phase rotation; or
left-multiplying the second sequence by a second preprocessing matrix, where
dimensions of the second preprocessing matrix are X*L, L represents a length of the second sequence, and a value of X or K is determined based on at least one of bandwidth of the low power signal, a transmission rate of the low power signal, channel bandwidth used by a communication device to send a signal, and a quantity of FFT points for performing IFFT processing for generation by the communication device.

Optionally, the second preprocessing matrix meets at least one of the following:

the second preprocessing matrix is a matrix in a second preset matrix set; and
the second preprocessing matrix is determined based on third information, and the third information includes at least one of transmission bit information of the to-be-transmitted information, a sequence value of the first sequence, a length of the first sequence, the bandwidth of the low power signal, the transmission rate of the low power signal, the channel bandwidth used by the communication device to send a signal, and the quantity of FFT points for performing IFFT processing for generation by the communication device.

Optionally, the processing module 702 is further configured to perform time domain processing on the to-be-transmitted information to obtain the first sequence, where the time domain processing includes performing N-fold upsampling on the to-be-transmitted information based on a bit order, and N is a positive integer.

Optionally, the phase adjustment sequence is further used to perform amplitude adjustment on the first sequence, or the target processing is further used to perform amplitude adjustment on the second sequence.

In this embodiment of this application, the target operation is performed on the first sequence to obtain the first signal; and inverse fast Fourier transform IFFT processing is performed on the first signal to obtain the low power signal, where the first sequence is determined based on the to-be-transmitted information, and the target operation includes any one of the following: performing a multiplication operation on the first sequence and the phase adjustment sequence to obtain the second signal, and then multiplying the second signal by the first preprocessing matrix; or multiplying the first sequence by the first preprocessing matrix to obtain the second sequence, and then performing target processing on the second sequence, where the target processing is used to cyclically shift the second sequence and then perform repeated superposition, or is used to perform phase adjustment on the second sequence. In this way, before IFFT processing is performed, a cyclic shift is performed and then repeated superposition is performed, or phase adjustment is performed, so that spectrum energy of the generated low power signal can be distributed at different frequencies. Therefore, in this embodiment of this application, transmission performance of the low power signal is improved.

The apparatus for generating a low power signal in this embodiment of this application may be an electronic device, for example, an electronic device with an operating system, or may be a component such as an integrated circuit or a chip in the electronic device. The electronic device may be a terminal, or may be another device other than a terminal. For example, the terminal may include but is not limited to the foregoing listed types of the terminal 11. The another device may be a server, a network attached storage (Network Attached Storage, NAS), or the like. This is not specifically limited in this embodiment of this application.

The apparatus for generating a low power signal provided in this embodiment of this application can implement the processes implemented in the method embodiment in FIG. 2, and achieve same technical effects. To avoid repetition, details are not described herein again.

As shown in FIG. 8, an embodiment of this application further provides a communication device 800, including a processor 801 and a memory 802. The memory 802 stores a program or instructions capable of running on the processor 801. When the program or the instructions are executed by the processor 801, the steps of the foregoing embodiment of the method for generating a low power signal are implemented, and same technical effects can be achieved. To avoid repetition, details are not described herein again.

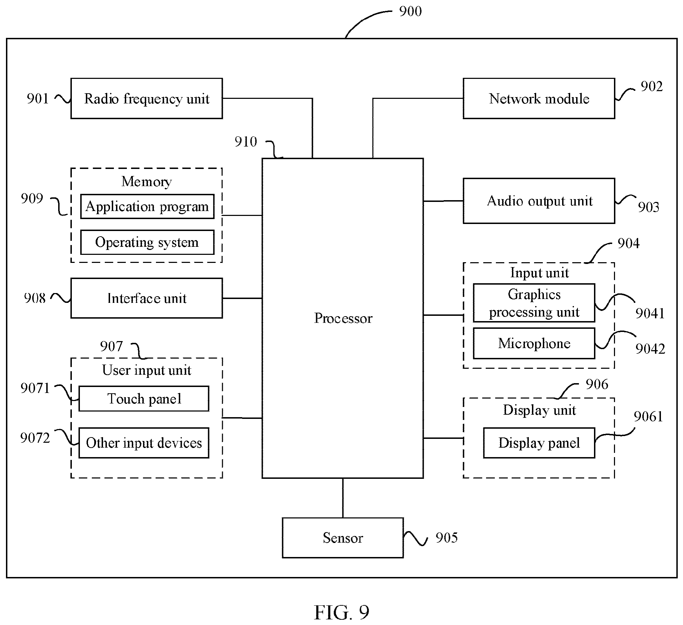

An embodiment of this application further provides a terminal, including a processor and a communication interface. The communication interface is coupled to the processor. The processor is configured to run a program or instructions to implement the steps in the method embodiment shown in FIG. 2. The terminal embodiment corresponds to the foregoing terminal-side method embodiment. Each implementation process and implementation of the foregoing method embodiment may be applied to the terminal embodiment, and same technical effects can be achieved. Specifically, FIG. 9 is a schematic diagram of a hardware structure of a terminal for implementing an embodiment of this application.

The terminal 900 includes but is not limited to at least some of a radio frequency unit 901, a network module 902, an audio output unit 903, an input unit 904, a sensor 905, a display unit 906, a user input unit 907, an interface unit 908, a memory 909, a processor 910, and the like.

A person skilled in the art may understand that the terminal 900 may further include a power supply (for example, a battery) that supplies power to each component. The power supply may be logically connected to the processor 910 by using a power management system, so as to implement functions such as charging management, discharging management, and power consumption management by using the power management system. The structure of the terminal shown in FIG. 9 does not constitute a limitation on the terminal. The terminal may include more or fewer components than those shown in the figure, or combine some components, or have different component arrangements. Details are not described herein again.

It should be understood that in this embodiment of this application, the input unit 904 may include a graphics processing unit (Graphics Processing Unit, GPU) 9041 and a microphone 9042. The graphics processing unit 9041 processes image data of a still picture or a video obtained by an image capture apparatus (such as a camera) in a video capture mode or an image capture mode. The display unit 906 may include a display panel 9061, and the display panel 9061 may be configured in a form of a liquid crystal display, an organic light-emitting diode, or the like. The user input unit 907 includes at least one of a touch panel 9071 and other input devices 9072. The touch panel 9071 is also referred to as a touchscreen. The touch panel 9071 may include two parts: a touch detection apparatus and a touch controller. The other input devices 9072 may include but are not limited to a physical keyboard, a function key (such as a volume control key or an on/off key), a trackball, a mouse, or a joystick. Details are not described herein.

In this embodiment of this application, after receiving downlink data from a network-side device, the radio frequency unit 901 may transmit the downlink data to the processor 910 for processing. In addition, the radio frequency unit 901 may send uplink data to the network-side device. Generally, the radio frequency unit 901 includes but is not limited to an antenna, an amplifier, a transceiver, a coupler, a low-noise amplifier, a duplexer, and the like.

The memory 909 may be configured to store a software program or instructions and various types of data. The memory 909 may mainly include a first storage area for storing a program or instructions and a second storage area for storing data. The first storage area may store an operating system, an application program or instructions required by at least one function (for example, a sound play function or an image play function), and the like. In addition, the memory 909 may include a volatile memory or a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 909 in this embodiment of this application includes but is not limited to these memories and any other suitable type of memory.

The processor 910 may include one or more processing units. Optionally, the processor 910 integrates an application processor and a modem processor. The application processor mainly processes operations related to an operating system, a user interface, an application program, and the like. The modem processor mainly processes a wireless communication signal, such as a baseband processor. It may be understood that the modem processor may not be integrated into the processor 910.

The processor 910 is configured to: perform a target operation on a first sequence to obtain a first signal; and perform inverse fast Fourier transform IFFT processing on the first signal to obtain a low power signal, where the first sequence is determined based on to-be-transmitted information, and the target operation includes any one of the following:

performing a multiplication operation on the first sequence and a phase adjustment sequence to obtain a second signal, and then multiplying the second signal by a first preprocessing matrix; or

multiplying the first sequence by the first preprocessing matrix to obtain a second sequence, and then performing target processing on the second sequence, where the target processing is used to cyclically shift the second sequence and then perform repeated superposition, or is used to perform phase adjustment on the second sequence.

It may be understood that for implementation processes of the implementations mentioned in this embodiment, reference may be made to related descriptions in the method embodiment, and same or corresponding technical effects are achieved. To avoid repetition, details are not described herein again.

An embodiment of this application further provides a network-side device, including a processor and a communication interface. The communication interface is coupled to the processor. The processor is configured to run a program or instructions to implement the steps in the method embodiment shown in FIG. 2. The network-side device embodiment corresponds to the foregoing network-side device method embodiment. Each implementation process and implementation of the foregoing method embodiment may be applied to the network-side device embodiment, and same technical effects can be achieved.

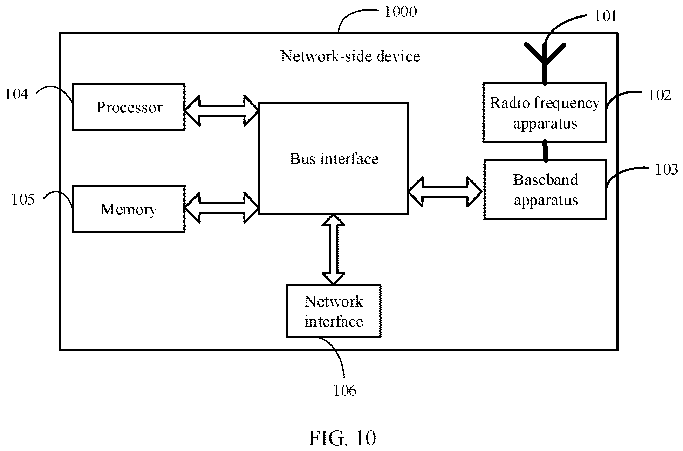

Specifically, an embodiment of this application further provides a network-side device. As shown in FIG. 10, the network-side device 1000 includes an antenna 101, a radio frequency apparatus 102, a baseband apparatus 103, a processor 104, and a memory 105. The antenna 101 is connected to the radio frequency apparatus 102. In an uplink direction, the radio frequency apparatus 102 receives information through the antenna 101, and sends the received information to the baseband apparatus 103 for processing. In a downlink direction, the baseband apparatus 103 processes to-be-sent information, and sends processed information to the radio frequency apparatus 102. After processing the received information, the radio frequency apparatus 102 sends processed information through the antenna 101.

The method performed by the network-side device in the foregoing embodiment may be implemented in the baseband apparatus 103. The baseband apparatus 103 includes a baseband processor.

For example, the baseband apparatus 103 may include at least one baseband board. A plurality of chips are disposed on the baseband board. As shown in FIG. 10, one of the chips is, for example, the baseband processor, and is connected to the memory 105 by using a bus interface, to invoke a program in the memory 105 to perform an operation of a network device shown in the foregoing method embodiment.

The network-side device may further include a network interface 106, and the interface is, for example, a common public radio interface (Common Public Radio Interface, CPRI).

Specifically, the network-side device 1000 in this embodiment of the present invention further includes instructions or a program that is stored in the memory 105 and that is capable of running on the processor 104. The processor 104 invokes the instructions or the program in the memory 105 to perform the method performed by the modules shown in FIG. 7, and same technical effects are achieved. To avoid repetition, details are not described herein again.

An embodiment of this application further provides a readable storage medium. The readable storage medium stores a program or instructions. When the program or instructions are executed by a processor, the processes of the foregoing embodiment of the method for generating a low power signal are implemented, and same technical effects can be achieved. To avoid repetition, details are not described herein again.

The processor is a processor in the terminal in the foregoing embodiments. The readable storage medium includes a computer-readable storage medium, such as a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor. The processor is configured to run a program or instructions to implement the processes in the foregoing embodiment of the method for generating a low power signal, and same technical effects can be achieved. To avoid repetition, details are not described herein again.

It should be understood that the chip mentioned in this embodiment of this application can also be referred to as a system-level chip, a system chip, a chip system, a system on chip, or the like.

An embodiment of this application further provides a computer program/program product. The computer program/program product is stored in a storage medium. The computer program/program product is executed by at least one processor to implement the processes in the foregoing embodiment of the method for generating a low power signal, and same technical effects can be achieved. To avoid repetition, details are not described herein again.

It should be noted that in this specification, the term "comprise", "include", or any of their variants is intended to cover a non-exclusive inclusion, so that a process, a method, an article, or an apparatus that includes a list of elements not only includes those elements but also includes other elements that are not expressly listed, or further includes elements inherent to such process, method, article, or apparatus. Without more constraints, an element preceded by "includes a ..." does not preclude the existence of additional identical elements in the process, method, article, or apparatus that includes the element. In addition, it should be noted that the scope of the method and apparatus in the implementations of this application is not limited to performing functions in an order shown or discussed, and may further include performing functions in a basically simultaneous manner or in reverse order based on the functions involved. For example, the described method may be performed in an order different from the described order, and various steps may be added, omitted, or combined. In addition, features described with reference to some examples may be combined in other examples.

According to the foregoing descriptions of the implementations, a person skilled in the art may clearly understand that the method in the foregoing embodiments may be implemented by a computer software product and a necessary general-purpose hardware platform, or certainly may be implemented by hardware. The computer software product is stored in a storage medium (such as a ROM, a RAM, a magnetic disk, or an optical disc) and includes several instructions for instructing a terminal or a network-side device to perform the methods described in the embodiments of this application.

The foregoing describes the embodiments of this application with reference to the accompanying drawings. However, this application is not limited to the foregoing specific implementations. The foregoing specific implementations are merely illustrative rather than restrictive. Inspired by this application, a person of ordinary skill in the art may develop many forms of implementations without departing from principles of this application and the protection scope of the claims, and all such implementations fall within the protection scope of this application.

**Claims**

1. A method for generating a low power signal, comprising:

   performing, by a communication device, a target operation on a first sequence to obtain a first signal; and
   performing, by the communication device, inverse fast Fourier transform IFFT processing on the first signal to obtain a low power signal, wherein
   the first sequence is determined based on to-be-transmitted information, and the target operation comprises any one of the following:

   performing a multiplication operation on the first sequence and a phase adjustment sequence to obtain a second signal, and then multiplying the second signal by a first preprocessing matrix; or
   multiplying the first sequence by the first preprocessing matrix to obtain a second sequence, and then performing target processing on the second sequence, wherein the target processing is used to cyclically shift the second sequence and then perform repeated superposition, or is used to perform phase adjustment on the second sequence.

2. The method according to claim 1, wherein the phase adjustment sequence meets at least one of the following:

   the phase adjustment sequence is a sequence in a preset sequence set; and
   the phase adjustment sequence is determined based on first information, and the first information comprises at least one of transmission bit information of the to-be-transmitted information, a sequence value of the first sequence, a length of the first sequence, bandwidth of the low power signal, a transmission rate of the low power signal, channel bandwidth used by the communication device to send a signal, and a quantity of fast Fourier transform FFT points for performing IFFT processing for generation by the communication device.

3. The method according to claim 1 or 2, wherein the phase adjustment sequence comprises at least one of the following:

at least one of a CAZAC sequence, a ZC sequence, a BPSK sequence, a π/2-BPSKsequence, a gold sequence, an m sequence, and a computer search sequence;

a sequence obtained by combining at least two of the CAZAC sequence, the ZC sequence, the BPSK sequence, the π/2-BPSK sequence, the gold sequence, the m sequence, and the computer search sequence; and

a sequence obtained by performing repeated sampling on at least one of the CAZAC sequence, the ZC sequence, the BPSK sequence, the π/2-BPSK sequence, the gold sequence, the m sequence, and the computer search sequence.

4. The method according to claim 3, wherein a manner of combining at least two of the CAZAC sequence, the ZC sequence, the BPSK sequence, the π/2-BPSK sequence, the gold sequence, the m sequence, and the computer search sequence comprises at least one of concatenation, multiplication, and a Kronecker product.

5. The method according to any one of claims 1 to 4, wherein the first preprocessing matrix comprises any one of the following: a predistortion matrix, a discrete Fourier transform DFT matrix, and an identity matrix.

6. The method according to any one of claims 1 to 5, wherein the first preprocessing matrix meets at least one of the following:

the first preprocessing matrix is a matrix in a first preset matrix set; and

the first preprocessing matrix is determined based on second information, and the second information comprises at least one of the transmission bit information of the to-be-transmitted information, the sequence value of the first sequence, the length of the first sequence, the bandwidth of the low power signal, the transmission rate of the low power signal, the channel bandwidth used by the communication device to send a signal, and the quantity of FFT points for performing IFFT processing for generation by the communication device.

7. The method according to claim 1, wherein the target processing comprises any one of the following:

obtaining K intermediate sequences by cyclically shifting the second sequence K times, and superposing the K intermediate sequences with the second sequence; or

cyclically shifting the second sequence K times to obtain K intermediate sequences, and superposing the K intermediate sequences with the second sequence, wherein each intermediate sequence is multiplied by a different phase rotation; or

left-multiplying the second sequence by a second preprocessing matrix, wherein

dimensions of the second preprocessing matrix are $X*L$, L represents a length of the second sequence, and a value of X or K is determined based on at least one of bandwidth of the low power signal, a transmission rate of the low power signal, channel bandwidth used by the communication device to send a signal, and a quantity of FFT points for performing IFFT processing for generation by the communication device.

8. The method according to claim 7, wherein the second preprocessing matrix meets at least one of the following:

the second preprocessing matrix is a matrix in a second preset matrix set; and

the second preprocessing matrix is determined based on third information, and the third information comprises at least one of transmission bit information of the to-be-transmitted information, a sequence value of the first sequence, a length of the first sequence, the bandwidth of the low power signal, the transmission rate of the low power signal, the channel bandwidth used by the communication device to send a signal, and the quantity of FFT points for performing IFFT processing for generation by the communication device.

9. The method according to any one of claims 1 to 8, wherein before the performing, by a communication device, a target operation on a first sequence to obtain a first signal, the method further comprises:

performing, by the communication device, time domain processing on the to-be-transmitted information to obtain the first sequence, wherein the time domain processing comprises performing N-fold upsampling on the to-be-transmitted information based on a bit order, and N is a positive integer.

10. The method according to any one of claims 1 to 9, wherein the phase adjustment sequence is further used to perform amplitude adjustment on the first sequence, or the target processing is further used to perform amplitude adjustment on the second sequence.

11. An apparatus for generating a low power signal, comprising:

an execution module, configured to perform a target operation on a first sequence to obtain a first signal; and
a processing module, configured to perform inverse fast Fourier transform IFFT processing on the first signal to obtain a low power signal, wherein
the first sequence is determined based on to-be-transmitted information, and the target operation comprises any one of the following:

performing a multiplication operation on the first sequence and a phase adjustment sequence to obtain a second signal, and then multiplying the second signal by a first preprocessing matrix; or
multiplying the first sequence by the first preprocessing matrix to obtain a second sequence, and then performing target processing on the second sequence, wherein the target processing is used to cyclically shift the second sequence and then perform repeated superposition, or is used to perform phase adjustment on the second sequence.

12. The apparatus according to claim 11, wherein the phase adjustment sequence meets at least one of the following:

the phase adjustment sequence is a sequence in a preset sequence set; and
the phase adjustment sequence is determined based on first information, and the first information comprises at least one of transmission bit information of the to-be-transmitted information, a sequence value of the first sequence, a length of the first sequence, bandwidth of the low power signal, a transmission rate of the low power signal, channel bandwidth used by a communication device to send a signal, and a quantity of fast Fourier transform FFT points for performing IFFT processing for generation by the communication device.

13. The apparatus according to claim 11 or 12, wherein the phase adjustment sequence comprises at least one of the following:

at least one of a CAZAC sequence, a ZC sequence, a BPSK sequence, a $\pi/2$-BPSKsequence, a gold sequence, an m sequence, and a computer search sequence;
a sequence obtained by combining at least two of the CAZAC sequence, the ZC sequence, the BPSK sequence, the $\pi/2$-BPSK sequence, the gold sequence, the m sequence, and the computer search sequence; and
a sequence obtained by performing repeated sampling on at least one of the CAZAC sequence, the ZC sequence, the BPSK sequence, the $\pi/2$-BPSK sequence, the gold sequence, the m sequence, and the computer search sequence.

14. The apparatus according to claim 13, wherein a manner of combining at least two of the CAZAC sequence, the ZC sequence, the BPSK sequence, the $\pi/2$-BPSK sequence, the gold sequence, the m sequence, and the computer search sequence comprises at least one of concatenation, multiplication, and a Kronecker product.

15. The apparatus according to any one of claims 11 to 14, wherein the first preprocessing matrix comprises any one of the following: a predistortion matrix, a discrete Fourier transform DFT matrix, and an identity matrix.

16. The apparatus according to any one of claims 11 to 15, wherein the first preprocessing matrix meets at least one of the following:

the first preprocessing matrix is a matrix in a first preset matrix set; and
the first preprocessing matrix is determined based on second information, and the second information comprises at least one of the transmission bit information of the to-be-transmitted information, the sequence value of the first sequence, the length of the first sequence, the bandwidth of the low power signal, the transmission rate of the low power signal, the channel bandwidth used by the communication device to send a signal, and the quantity of FFT points for performing IFFT processing for generation by the communication device.

17. The apparatus according to claim 11, wherein the target processing comprises any one of the following:

obtaining K intermediate sequences by cyclically shifting the second sequence K times, and superposing the K intermediate sequences with the second sequence; or
cyclically shifting the second sequence K times to obtain K intermediate sequences, and superposing the K intermediate sequences with the second sequence, wherein each intermediate sequence is multiplied by a different phase rotation; or
left-multiplying the second sequence by a second preprocessing matrix, wherein

dimensions of the second preprocessing matrix are X*L, L represents a length of the second sequence, and a value of X or K is determined based on at least one of bandwidth of the low power signal, a transmission rate of the low power signal, channel bandwidth used by a communication device to send a signal, and a quantity of FFT points for performing IFFT processing for generation by the communication device.

18. The apparatus according to claim 17, wherein the second preprocessing matrix meets at least one of the following:

the second preprocessing matrix is a matrix in a second preset matrix set; and
the second preprocessing matrix is determined based on third information, and the third information comprises at least one of transmission bit information of the to-be-transmitted information, a sequence value of the first sequence, a length of the first sequence, the bandwidth of the low power signal, the transmission rate of the low power signal, the channel bandwidth used by the communication device to send a signal, and the quantity of FFT points for performing IFFT processing for generation by the communication device.

19. The apparatus according to any one of claims 11 to 18, wherein the processing module is further configured to perform time domain processing on the to-be-transmitted information to obtain the first sequence, wherein the time domain processing comprises performing N-fold upsampling on the to-be-transmitted information based on a bit order, and N is a positive integer.

20. The apparatus according to any one of claims 11 to 19, wherein the phase adjustment sequence is further used to perform amplitude adjustment on the first sequence, or the target processing is further used to perform amplitude adjustment on the second sequence.

21. A terminal, comprising a processor and a memory, wherein the memory stores a program or instructions capable of running on the processor, and when the program or the instructions are executed by the processor, the steps of the method for generating a low power signal according to any one of claims 1 to 10 are implemented.

22. A network-side device, comprising a processor and a memory, wherein the memory stores a program or instructions capable of running on the processor, and when the program or the instructions are executed by the processor, the steps of the method for generating a low power signal according to any one of claims 1 to 10 are implemented.

23. A readable storage medium, wherein the readable storage medium stores a program or instructions, and when the program or the instructions are executed by a processor, the steps of the method for generating a low power signal according to any one of claims 1 to 10 are implemented.

FIG. 1

| | |
|---|---|
| A network-side device performs a target operation on a first sequence to obtain a first signal | 201 |
| The network-side device performs inverse fast Fourier transform processing on the first signal to obtain a low power signal | 202 |

FIG. 2

FIG. 3A

FIG. 3B

FIG. 3C

FIG. 3D

FIG. 4A

FIG. 4B

FIG. 4C

FIG. 4D

FIG. 4E

FIG. 4F

FIG. 5A

FIG. 5B

FIG. 5C

FIG. 5D

FIG. 5E

FIG. 5F

FIG. 6A

FIG. 6B

FIG. 6C

FIG. 6D

FIG. 6E

FIG. 6F

EP 4 668 686 A1

FIG. 7

FIG. 8

29

900

901 — Radio frequency unit

Network module — 902

910

Memory
909 — | Application program |
| Operating system |

908 — Interface unit

Processor

Audio output unit — 903

904
Input unit
| Graphics processing unit | — 9041
| Microphone | — 9042

906
Display unit — 9061
| Display panel |

907
User input unit
9071 — | Touch panel |
9072 — | Other input devices |

Sensor — 905

FIG. 9

FIG. 10

## INTERNATIONAL SEARCH REPORT

| International application No. |
|---|
| **PCT/CN2024/076508** |

| A. | CLASSIFICATION OF SUBJECT MATTER |
|---|---|

H04L27/26(2006.01)i

According to International Patent Classification (IPC) or to both national classification and IPC

| B. | FIELDS SEARCHED |
|---|---|

Minimum documentation searched (classification system followed by classification symbols)

IPC:H04L,H04B

Documentation searched other than minimum documentation to the extent that such documents are included in the fields searched

Electronic data base consulted during the international search (name of data base and, where practicable, search terms used)

CNTXT, ENTXT, DWPI, CNKI, IEEE: 调相, 调整, 相位, 移相, 循环移位, 叠加, 低, 功率, 能量, 功耗, 频域, 时域, 序列, IFFT, DFT, low, power, phase, adjust+, cyclic shifting, superposition, sequence, time domain, frequency domain

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2004008616 A1 (SAMSUNG ELECTRONICS CO., LTD.) 15 January 2004 (2004-01-15) description, paragraphs [0011]-[0049] | 1-23 |
| A | US 2021153120 A1 (SONY CORP.) 20 May 2021 (2021-05-20) entire document | 1-23 |
| A | US 2020145266 A1 (QUALCOMM INCORPORTED) 07 May 2020 (2020-05-07) entire document | 1-23 |
| A | WO 2018121376 A1 (VIVO MOBILE COMMUNICATION CO., LTD.) 05 July 2018 (2018-07-05) entire document | 1-23 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T"　later document published after the international filing date or priority date and not in conflict with the application but cited to understand the principle or theory underlying the invention

"X"　document of particular relevance; the claimed invention cannot be considered novel or cannot be considered to involve an inventive step when the document is taken alone

"Y"　document of particular relevance; the claimed invention cannot be considered to involve an inventive step when the document is combined with one or more other such documents, such combination being obvious to a person skilled in the art

"&"　document member of the same patent family

| Date of the actual completion of the international search | Date of mailing of the international search report |
|---|---|
| **12 May 2024** | **15 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 668 686 A1**

### INTERNATIONAL SEARCH REPORT
#### Information on patent family members

| | International application No. |
|---|---|
| | **PCT/CN2024/076508** |

| Patent document cited in search report | | | Publication date (day/month/year) | Patent family member(s) | | | Publication date (day/month/year) |
|---|---|---|---|---|---|---|---|
| US | 2004008616 | A1 | 15 January 2004 | EP | 1381196 | A1 | 14 January 2004 |
| | | | | KR | 20040005175 | A | 16 January 2004 |
| | | | | CA | 2492000 | A1 | 15 January 2004 |
| | | | | RU | 2004139085 | A | 20 July 2005 |
| | | | | AU | 2003245101 | A1 | 23 January 2004 |
| | | | | WO | 2004006479 | A1 | 15 January 2004 |
| US | 2021153120 | A1 | 20 May 2021 | EP | 3665882 | A1 | 17 June 2020 |
| | | | | WO | 2019030337 | A1 | 14 February 2019 |
| US | 2020145266 | A1 | 07 May 2020 | WO | 2020092980 | A1 | 07 May 2020 |
| | | | | TW | 202027472 | A | 16 July 2020 |
| | | | | US | 2021314203 | A1 | 07 October 2021 |
| | | | | US | 2023239189 | A1 | 27 July 2023 |
| | | | | SG | 11202103083 | VA | 28 May 2021 |
| | | | | EP | 3874705 | A1 | 08 September 2021 |
| WO | 2018121376 | A1 | 05 July 2018 | CN | 108271271 | A | 10 July 2018 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310131415